# NOUVEAU FASCICULE DE BREVET EUROPEEN

(11) **EP 1 206 715 B2**
(45) Date de publication et mention de la décision concernant l'opposition: **19.04.2017**
(45) Mention de la délivrance du brevet: 14.08.2013
(21) Numéro de dépôt: 00981436.9
(22) Date de dépôt: 17.11.2000
(51) Int. Cl.: G02B 1/11, C03C 17/34

(54) **SUBSTRAT TRANSPARENT COMPORTANT UN REVÊTEMENT ANTIREFLET**
DURCHSICHTIGES SUBSTRAT MIT ANTI-REFLEXIONSSCHICHT
TRANSPARENT SUBSTRATE COMPRISING AN ANTIGLARE COATING

(30) Priorité: 17.11.1999 FR 9914423
(43) Date de publication de la demande: 22.05.2002
(73) Titulaire: SAINT-GOBAIN GLASS FRANCE, 92400 Courbevoie (FR)
(72) Inventeur: JORET, Laurent, F-75015 Paris (FR); DURANDEAU, Anne, F-75017 Paris (FR); HUHN, Norbert, 52134 Herzogenrath (DE); STAHLSCHMIDT, Olaf, 52072 Aachen (DE); BILLERT, Ulrich, 52066 Aachen (DE)
(74) Mandataire: Saint-Gobain Recherche
(86) Numéro de dépôt international: PCT/FR2000/003209
(87) Numéro de publication internationale: WO 2001/037006

(56) Documents cités:
- EP-A- 0 515 847
- EP-A1- 0 980 850
- WO-A-97/43224
- WO-A1-96/41215
- FR-A- 2 713 624
- FR-A1- 2 669 325
- US-A- 5 073 451
- US-A- 5 332 618
- US-A- 5 891 556
- US-A- 5 939 201
- US-A- 6 068 914
- PATENT ABSTRACTS OF JAPAN vol. 009, no. 183 (M-400), 30 juillet 1985 (1985-07-30) & JP 60 050022 A (TOYOTA JIDOSHA KK), 19 mars 1985 (1985-03-19)
- Techniques de l'Ingénieur, Diélectriques bases théoriques, D213, 1986

## Description

L'invention concerne un substrat transparent, notamment en verre, destiné à être incorporé dans un vitrage et muni, sur au moins une de ses faces, d'un revêtement antireflet.

Un revêtement antireflet est usuellement constitué d'un empilement de couches minces interférentielles, en général une alternance de couches à base de matériau diélectrique à forts et faibles indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc son ratio lumière transmise/lumière réfléchie augmenter, ce qui améliore la visibilité des objets placés derrière lui. Lorsqu'on cherche à atteindre un effet antireflet maximal, il est alors préférable de munir les deux faces du substrat de ce type de revêtement.

Il y a beaucoup d'applications à ce type de produit : il peut servir de vitrage dans le bâtiment, par exemple en tant que présentoir de magasin et verre bombé architectural, afin de mieux distinguer ce qui se trouve dans la vitrine, même quand l'éclairage intérieur est faible par rapport à l'éclairage extérieur. Il peut aussi servir de verre de comptoir.

Une application dans l'équipement des véhicules a également été envisagée, notamment pour les voitures, les trains. Conférer un effet antireflet à un pare-brise est particulièrement avantageux à plusieurs titres : on peut accroître la transmission lumineuse dans l'habitacle, donc augmenter le confort visuel des passagers. Cela permet aussi de supprimer les réflexions parasites gênant le conducteur, en particulier la réflexion du tableau de bord.
Des exemples de revêtements antireflets sont décrits dans les brevets EP 0 728 712 et WO97/43224.
Ainsi, par exemple WO 97/43224 concerne un empilement antireflet alternant couches à haut indice et couches à bas indice.
FR-A-2713624 décrit un empilement antireflet alternant des couches bas indice et haut indice, ayant la particularité de se terminer par une couche haut indice.
On connaît en outre par US-5 891 556 un revêtement antireflet alternant des couches à bas et haut indice en Nb₂O₅ d'indice 2,3 ou en Bi₂O₃ d'indice similaire, cet empilement n'étant pas cependant optimisé pour une incidence oblique.

Cependant, que l'on parle de présentoir, de verre de comptoir, de présentoir ou de pare-brise, il s'agit de vitrages qui, contrairement à des vitrages classiques de façade de bâtiment par exemple, se trouvent, une fois montés, en position non nécessairement verticale. Les pare-brise sont usuellement inclinés à 60° environ, les vitrines, comptoirs sont souvent bombés, avec des angles d'observation variables.

Or, la plupart des revêtements antireflets mis au point à ce jour ont été optimisés pour minimiser la réflexion lumineuse à incidence normale, sans prendre en compte l'aspect optique du vitrage vu de façon oblique. Il est ainsi connu qu'à incidence normale, on peut obtenir des valeurs de réflexion lumineuse R_{L} très faibles avec des empilements à quatre couches avec une alternance couche à haut indice / couche à bas indice / couche à haut indice / couche à bas indice.

Les couches à haut indice sont généralement en TiO₂ qui présente effectivement un indice très élevé, d'environ 2,45 et les couches à bas indice sont le plus souvent en SiO₂. Les épaisseurs optiques des couches (le produit de leur épaisseur géométrique par leur indice de réfraction) s'expriment successivement de la façon suivante : (e1 + e2) <□/4 - e3 ≥ λ/2 - e4 = λ/4, avec λ la longueur d'onde moyennée dans le domaine du visible autour de 500 nm et e1 à e4 les épaisseurs des quatre couches déposées successivement sur le substrat. IL peut s'agir aussi d'un empilement à trois couches. Dans ce cas, il est préférable que les épaisseurs optiques e'1, e'2 et e'3 des couches dans l'ordre de leurs dépôts sur le substrat respectent les conditions suivantes : □/4 - □/2 - □/4.

L'aspect en réflexion, notamment l'intensité de la réflexion lumineuse, n'est cependant pas satisfaisant dès que l'on s'éloigne un peu d'une vision perpendiculaire au vitrage.

Des études ont été faites pour prendre en compte un angle de vision oblique, mais n'ont pas donné non plus pleinement satisfaction : on peut par exemple citer le brevet EP-0 515 847 qui propose un empilement deux couches du type TiO₂+SiO₂/SiO₂ ou à trois couches du type TiO₂+SiO₂/TiO₂/SiO₂ déposées par sol-gel, mais qui n'est pas assez performant.

L'invention a alors pour but de remédier aux inconvénients ci-dessus, en cherchant à mettre au point un revêtement antireflet qui puisse abaisser le niveau de réflexion lumineuse d'un substrat transparent du type verre dans une plage élargie d'angles d'incidence, et plus particulièrement selon une incidence oblique allant de 50 à 70° d'inclinaison par rapport à la verticale, et ceci sans compromettre la faisabilité économique et/ou industrielle de sa fabrication. Subsidiairement, l'invention a pour but la mise au point d'un tel revêtement qui soit en outre apte à subir des traitements thermiques, ceci notamment dans le cas où le substrat porteur est en verre qui, dans son application finale, doit être recuit, bombé ou trempé.

L'invention a tout d'abord pour objet un substrat transparent, notamment verrier, selon la revendication 1.

Au sens de l'invention, on comprend par "couche" soit une couche unique, soit une superposition de couches où chacune d'elles respecte l'indice de réfraction indiqué et où la somme de leurs épaisseurs géométriques reste également la valeur indiquée pour la couche en question.

Au sens de l'invention, les couches sont en matériau diélectrique, notamment du type oxyde ou nitrure comme cela sera détaillé ultérieurement. On n'exclut cependant pas qu'au moins l'une d'entre elles soit modifiée de façon à être au moins un peu conductrice, par exemple en dopant un oxyde métallique, ceci par exempte pour conférer à l'empilement antireflet également une fonction anti-statique.

L'invention s'intéresse préférentiellement aux substrats verriers, mais s'applique aussi aux substrats transparents à base de polymère, par exemple en polycarbonate.

L'invention porte donc sur un empilement antireflet de type à quatre couches. C'est un bon compromis, car le nombre de couches est suffisamment important pour que leur interaction interférentielle permettre d'atteindre un effet antireflet important. Cependant, ce nombre reste suffisamment raisonnable pour qu'on puisse fabriquer le produit à grande échelle, sur ligne industrielle, sur des substrats de grande taille.

Les critères d'épaisseur et d'indice de réfraction retenus dans l'invention permettent d'obtenir un effet antireflet à large bande de basse réflexion lumineuse, et ceci même à des angles d'incidence élevés comme 50 jusqu'à 70°, ce qui est exceptionnel (cela n'empêche pas, bien sûr, les empilements antireflets de l'invention d'abaisser également la réflexion lumineuse à incidence normale).

La sélection de ces critères a été délicate, car les inventeurs ont pris en compte la faisabilité industrielle du produit ainsi que l'aspect en réflexion lumineuse à deux niveaux : à la fois en voulant minimiser la valeur de réflexion lumineuse R_{L} à incidence oblique en elle-même, mais aussi en voulant obtenir pour cette réflexion lumineuse oblique une colorimétrie satisfaisante, c'est-à-dire une couleur en réflexion dont la teinte et l'intensité étaient acceptables sur le plan esthétique.

Les inventeurs y sont parvenus, avec notamment l'abaissement d'au moins 3 ou 4% de la valeur de R_{L} entre 50 et 70° (selon l'illuminant D₆₅, et préférentiellement l'obtention de valeurs de a* et b* dans le système de colorimétrie (L, a*, b*) négatives pour cette même réflexion lumineuse. Cela se traduit par une diminution significative des reflets et une couleur dans les bleu-verts en réflexion qui est actuellement jugée esthétique dans de nombreuses applications, notamment dans t'industrie automobile.

Les deux caractéristiques peut-être les plus marquantes de l'invention sont les suivantes :
- d'une part, par rapport à un empilement antireflet à quatre couches standard, l'épaisseur de la dernière couche, à bas indice, a été significativement augmentée : son épaisseur préférée est supérieure à la valeur de λ/4 utilisée habituellement,
- d'autre part, il a été découvert que contrairement au choix fait habituellement pour les couches à haut indice, il n'était pas nécessaire et il était même désavantageux, de choisir des matériaux à indice très élevé comme le TiO₂. Il s'est avéré qu'il était plus judicieux au contraire d'utiliser pour ces couches des matériaux d'indice de réfraction plus modéré, d'au plus 2,1. Cela va ainsi à l'encontre de l'enseignement connu sur les empilements antireflets en général.

Les inventeurs ont ainsi exploité le fait qu'à incidence oblique, le spectre de basse réflexion s'élargissait, et que l'on pouvait ainsi se permettre d'utiliser les matériaux dont l'indice est autour de 2, comme l'oxyde d'étain SnO₂ ou le nitrure de silicium Si₃N₄. Par rapport au TiO₂ notamment, ces matériaux présentent l'avantage d'avoir des vitesses de dépôt bien plus élevées quand on utilise la technique de dépôt dite de pulvérisation cathodique. Dans cette gamme modérée d'indices, on a également un choix plus important de matériaux pouvant être déposés par pulvérisation cathodique, ce qui offre plus de souplesse dans la fabrication industrielle et plus de possibilités pour ajouter des fonctionnalités supplémentaires à l'empilement comme cela sera détaillé ci-dessous.

Ces matériaux à indice "modéré" offrent aussi plus de souplesse sur le plan strictement optique : il a été découvert qu'ils permettaient d'ajuster plus finement le "couple" de valeurs définissant le plus justement la réflexion lumineuse (côté couche) du substrat, à savoir d'une part la valeur de réflexion lumineuse R_{L} et d'autre part les valeurs de a* et b* lui correspondant à incidence oblique (comme cela ressortira des exemples détaillés par la suite, il est en effet possible de privilégier davantage l'une ou l'autre de ces deux valeurs selon l'objectif ou l'application visés).

Ils permettent également de rendre l'empilement globalement moins sensible optiquement, notamment sur le plan colorimétrique, aux variations d'épaisseur des couches dans l'empilement ainsi qu'aux variations dans les angles d'incidence avec lesquels les verres sont observés.

Sont données ci-après les gammes préférées des épaisseurs géométriques et des indices des quatre couches de l'empilement selon invention :
- pour la première et/ou la troisième couche, celles à haut indice :
   - e₁ est avantageusement compris entre 10 et 30 nm ou entre 15 et 25 nm,
   - e₃ est d'au moins 75 nm,
- la deuxième et/ou la quatrième couche, celles à bas indice :
   - n₂ et/ou n₄ sont avantageusement compris entre 1,35 (ou 1,40) et 1,55,
   - e₂ est notamment inférieur ou égal à 35 ou à 30 nm, en étant notamment compris entre 10 et 35 nm,
   - e₄ est avantageusement supérieur ou égal à 90 nm, et est notamment inférieur ou égal à 120 ou 110 nm.

Selon une variante non conforme à l'objet des présentes revendications, on peut remplacer la première couche 1 à haut indice et la seconde couche 2 à bas indice par une couche unique 5 à indice de réfraction dit "intermédiaire" e₅, notamment compris entre 1,65 et 1,80 et ayant de préférence une épaisseur optique e._{opt.5} comprise entre 50 et 140 nm (de préférence 85 à 120 nm). Dans les empilements antireflets conventionnels à trois couches, optimisés pour une vision perpendiculaire, cette épaisseur est plutôt au-dessus de 120 nm. Cette couche à indice intermédiaire a un effet optique similaire à celui d'une séquence couche à haut indice / couche à bas indice quand il s'agit de la première séquence, des deux couches les plus proches du substrat porteur de l'empilement. Elle présente l'avantage de diminuer le nombre global de couches de l'empilement. Elle est de préférence à base d'un mélange entre d'une part de l'oxyde de silicium, et d'autre part au moins un oxyde métallique choisi parmi l'oxyde d'étain, l'oxyde de zinc, l'oxyde de titane. Elle peut aussi être à base d'oxynitrure ou oxycarbure de silicium et/ou à base d'oxynitrure d'aluminium.

Les matériaux constituant la première et/ou la troisième couche, celles à haut indice, sont à base d'oxyde(s) métallique(s) choisi(s) parmi l'oxyde de zinc ZnO, l'oxyde d'étain SnO₂. Ils peuvent aussi être à base de nitrure(s) choisi(s) parmi le nitrure de silicium Si₃N₄ et/ou le nitrure d'aluminium AlN.

Utiliser une couche en nitrure pour l'une ou l'autre des couches à haut indice, notamment la troisième au moins, permet d'ajouter une fonctionnalité à l'empilement, à savoir une capacité à mieux supporter les traitements thermiques sans altération notable de ses propriétés optiques. Or, c'est une fonctionnalité qui est importante pour les vitrages du type parebrise, comptoir de magasin, car il s'agit de vitrage devant subir des traitements thermiques à haute température, du type bombage, trempe, recuit, opération de feuilletage, où les verres doivent être chauffés à au moins 120°C (feuilletage) jusqu'à 500 à 700°C (bombage, trempe). Il devient alors décisif de pouvoir déposer les couches minces avant le traitement thermique sans que cela pose de problème (déposer des couches sur un verre bombé est délicat et coûteux, il est beaucoup plus simple sur le plan industriel de faire les dépôts avant tout traitement thermique).

On peut ainsi avoir une seule configuration d'empilement antireflet que le verre porteur soit ou non destiné à subir un traitement thermique.

Même s'il n'est pas destiné à être chauffé, il reste intéressant d'utiliser au moins une couche en nitrure, car elle améliore la durabilité mécanique et chimique de l'empilement dans son ensemble.

Selon un mode de réalisation particulier, la première et/ou la troisième couche, celles à haut indice, peuvent en fait être constituées de plusieurs couches à haut indice superposées. Il peut tout particulièrement s'agir d'un bicouche du type SnO₂/Si₃N₄ ou Si₃N₄/SnO₂. L'avantage en est le suivant : le Si₃N₄ tend à se déposer un peu moins facilement, un peu plus lentement qu'un oxyde métallique classique comme SnO₂, ZnO ou ZrO₂ par pulvérisation cathodique réactive. Pour la troisième couche notamment, qui est la plus épaisse et la plus importante pour protéger l'empilement des détériorations éventuelles résultant d'un traitement thermique, il peut être intéressant de dédoubler la couche de façon à mettre juste l'épaisseur suffisante de Si₃N₄ pour obtenir l'effet de protection vis-à-vis des traitements thermiques voulus, et à "compléter" optiquement la couche par du SnO₂ ou du ZnO.

Les matériaux les plus appropriés pour constituer la seconde et/ou la quatrième couche, celles à bas indice, sont à base d'oxyde de silicium, d'oxynitrure et/ou d'oxycarbure de silicium ou encore à base d'un oxyde mixte de silicium et d'aluminium. Un tel oxyde mixte tend à avoir une meilleure durabilité, notamment chimique, que du SiO₂ pur (Un exemple en est donné dans le brevet EP- 791 562). On peut ajuster la proportion respective des deux oxydes pour obtenir l'amélioration de durabilité escomptée sans trop augmenter l'indice de réfraction de la couche.

Le verre choisi pour le substrat revêtu de l'empilement selon l'invention ou pour les autres substrats qui lui sont associés pour former un vitrage, peut être particulier, par exemple extra-clair du type "Diamant", ou clair du type "Planilux" ou teinté du type "Parsol", trois produits commercialisés par Saint-Gobain Vitrage, ou encore être de type "TSA" ou "TSA ++" comme décrit dans le brevet EP 616 883. IL peut aussi s'agir de verres éventuellement teintés comme décrit dans les brevets WO 94/14716; WO 96/00194, EP 0 644 164 ou WO 96/28394. Il peut être filtrant vis-à-vis de rayonnements du type ultraviolet.

Le ou les substrats peuvent avoir subi des traitements thermiques, que l'empilement antireflet selon l'invention est à même de supporter, comme un recuit, une trempe, un bombage ou même un pliage, c'est-à-dire un bombage avec un très petit rayon de courbure (application pour les vitrines, comptoirs de magasins en particulier), tout particulièrementquand au moins la troisième couche de l'empilement à haut indice contient du nitrure de silicium ou d'aluminium. Cela signifie que de tels traitements thermiques n'affectent pas ou quasiment pas la durabilité mécanique et chimique de l'empilement, et n'entraînent pas (ou très peu) de modifications de ses propriétés optiques.

L'invention a également pour objet les vitrages incorporant les substrats munis de l'empilement de couches défini plus haut. Le vitrage en question peut être "monolithique" c'est-à-dire composé du seul substrat revêtu de l'empilement de couches sur une de ses faces. Sa face opposée peut être dépourvue de tout revêtement antireflet, en étant nue ou recouverte d'un revêtement ayant une autre fonctionnalité. Il peut s'agir d'un revêtement à fonction anti-solaire (utilisant par exemple une ou plusieurs couches d'argent entourées de couches en diélectrique, ou des couches en nitrures comme TiN ou ZrN ou en oxydes métalliques ou en acier ou en alliage Ni-Cr), à fonction bas-émissive (par exemple en oxyde de métal dopé comme SnO₂:F ou oxyde d'indium dopé à l'étain ITO ou une ou plusieurs couches d'argent), à fonction anti-statique (oxyde métallique dopé ou sous-stoechiométrique en oxygène), couche chauffante (oxyde métallique dopé, Cu, Ag par exemple) ou réseau de fils chauffants (fils de cuivre ou bandes sérigraphiées à partir de pâte à l'argent conductrice), anti-buée (à l'aide d'une couché hydrophile), anti-pluie (à l'aide d'une couche hydrophobe, par exemple à base de polymère fluoré), anti-salissures (revêtement photocatalytique comprenant du TiO₂ au moins partiellement cristallisé sous forme anatase).

Ladite face opposée peut aussi être munie d'un empilement antireflet, pour maximiser l'effet antireflet recherché. Dans ce cas, soit il s'agit également d'un empilement antireflet répondant aux critères de la présente invention, soit il s'agit d'un autre type B de revêtement antireflet.

Un vitrage particulièrement intéressant incorporant un substrat revêtu selon l'invention a une structure feuilletée, qui associe deux substrats verriers à l'aide d'une ou plusieurs feuilles en matériau thermoplastique comme le polyvinyl-butyral PVB.. Dans ce cas, l'un des deux substrats est muni, en face externe (opposée à l'assemblage du verre avec la feuille thermoplastique), de l'empilement (A) antireflet selon l'invention. L'autre verre, en face externe également, pouvant comme précédemment, être nu, revêtu de couches ayant une autre fonctionnalité, revêtu du même d'empilement (A) antireflet ou d'un autre type (B) d'empilement antireflet, ou encore d'un revêtement ayant une autre fonctionnalité comme dans le cas précédent(cet autre revêtement peut aussi être disposé non pas sur une face opposée à l'assemblage, mais sur une des faces de l'un des substrats rigides qui se trouve tournée du côté de la feuille thermoplastique d'assemblage). De façon conventionnelle, on numérote les faces des vitrages en partant de la face la plus extérieure. Ainsi, on peut avoir l'empilement antireflets selon l'invention en faces 1 et/ou 4 (c'est-à-dire sur la face des verres tournées vers l'extérieur du vitrage, quand il y a deux verres).

On peut ainsi munir le vitrage feuilleté d'un réseau de fils chauffants, d'une couche chauffante ou d'un revêtement anti-solaire à l'"intérieur" du feuilleté (donc en faces 2 et/ou 3). Des revêtements anti-solaires à base de deux couches d'argent intercalées avec trois couches ou multi-couches en matériau diélectrique particulièrement appropriés sont décrits dans les brevets EP 638 528, EP 718 250, EP 844 219 et EP 847 965.

Selon une autre variante, au lieu de déposer le revêtement anti-solaire sur l'un des substrats rigides (l'un des verres), on peut le déposer sur une feuille de polymère du type PET (polyéthylène téréphtatate), que l'on vient disposer entre deux feuilles de polymère thermoplastique du type PVB avant feuilletage avec les deux verres. Ce type de configuration est notamment décrite dans les brevets EP 758 583 et US 5 932 329, EP 839 644, WO99/45415 et EP 1010677.

On peut disposer en "extérieur" (donc en faces 1 ou 4, sur la face non recouverte de l'empilement antireflets selon l'invention) une couche anti-salissures (par exemple à base de TiO₂ photocatalytique comme décrit dans les brevets WO 97/10186, WO 97/10185 ou WO 99/44954), ou encore une couche hydrophile ou hydrophobe.

On peut ainsi avoir des configurations du type :
revêtement (A) antireflet/verre/PVB/verre nu ou fonctionnalisé antisalissures, hydrphile ou hydeophobe revêtement (A) antireftet/verre/PVB/verre/revêtement antireflet (A) ou(B) revêtement (A) antireflet/verre/PVB/PET muni sur une de ses faces d'un revêtement antisolaire/PVB/verre/revêtement antireflet (A) ou(B) optionnel revêtement (A) antireflet/verre/PVB/revêtement antisolaire /verre/revêtement antireflet (A) ou (B) optionnel revêtement (A) antireftet/verre/revêtement antisolaire/PVB/verre/revêtement antireflet (A) ou (B) optionnel

Ces configurations, notamment avec les deux substrats bombés et/ou trempés, permettent l'obtention d'un vitrage automobile, et notamment d'un parebrise très avantageux : en effet, les normes imposent dans les automobiles des parebrise à haute transmission lumineuse, d'au moins 75% en incidence normale selon les standards européens. Grâce à l'incorporation de revêtements antireflets dans une structure feuilletée de parebrise usuelle, la transmission lumineuse du vitrage s'en trouve augmentée, par exemple d'au moins 6%, ce qui est avantageux car cela permet d'apporter plus de lumière dans l'habitacle du véhicule assurant plus de confort et de sécurité. Dans une autre utilisation, la baisse de réflexion lumineuse peut servir à abaisser la transmission énergétique tout en étant encore aux normes en terme de transmission lumineuse. On peut ainsi augmenter l'effet anti-solaire du parebrise, par exemple par absorption des substrats en verre en utilisant des substrats verriers davantage teintés. Concrètement, on peut ainsi faire passer la valeur de réflexion lumineuse d'un parebrise feuilleté standard de 13.6% à moins de 6.5 %, tout en abaissant sa transmission énergétique d'au moins 7% par exemple en la faisant passer de 48.5 à 41.5 %, avec une transmission lumineuse constante de 75%.

Choisir un autre revêtement antireflet de type (B) pour l'autre face du vitrage (qu'il soit monolithique ou feuilleté) peut répondre à différents objectifs. Il peut être souhaitable que le second revêtement soit encore plus simple à fabriquer et qu'il possède donc un nombre inférieur de couches. Il peut aussi être intéressant de différencier le niveau de durabilité requis pour les deux revêtements selon leur degré d'exposition à des agressions mécaniques ou chimiques. Ainsi, pour un vitrage équipant un véhicule, il peut être judicieux d'équiper la face extérieure du vitrage d'un revêtement plus durable, même s'il est optiquement moins performant, que la face intérieure dirigée vers l'habitacle (il suffit de penser par exemple à l'agression mécanique répétée des balais d'essuie-glace pour les parebrise).

L'invention comprend aussi les vitrages munis de l'empilement antireflets de l'invention et qui sont des vitrages multiples, c'est-à-dire utilisant au moins deux substrats séparés par une lame de gaz intermédiaire (double ou triple vitrage). Là encore, les autres faces du vitrages peuvent être également traitées antireflets ou présenter une autre fonctionnalité.

A noter que cette autre fonctionnalité peut aussi consister à disposer sur une même face l'empilement antireflets et l'empilement ayant une autre fonctionnalité (par exemple en surmontant l'antireflets d'une très fine couche de revêtement anti-salissures.)

Une plus grande durabilité peut être obtenue en diminuant le nombre de couches, voire en en gardant qu'une seule, pour minimiser les contraintes internes dans l'empilement et les risques de délamination, et/ou en adaptant le procédé de dépôt des couches. Il est connu que des dépôts à chaud, utilisant les techniques de pyrolyse par exemple, permettent d'obtenir des couches plus adhérentes, plus solides que des dépôts à froid, par exemple par pulvérisation cathodique.

Ce revêtement antireflet de type B peut être choisi parmi l'un des revêtements suivants :
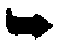 une seule couche à bas indice, d'indice de réfraction inférieur à 1,60 ou 1,50, notamment de l'ordre de 1,35 à 1,48. Il s'agit de préférence d'une couche de SiO₂ d'épaisseur comprise entre 80 et 120 nm, que l'on peut déposer par sol-gel, CVD, décharge couronne ou pulvérisation,
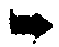 une seule couche encore, mais dont l'indice de réfraction varie dans son épaisseur pour en améliorer les performances. Il peut notamment s'agir d'une couche à base d'oxynitrure de silicium SiOₓN_{y}, avec x et y variant dans son épaisseur, ou à base d'oxyde mixte de silicium et de titane Si_{z}Ti_{i-z}O₂, avec z variant dans l'épaisseur de la couche. Ce type de revêtement peut être déposé par CVD plasma et est détaillé dans le brevet FR98/16118 du 21 décembre 1998,
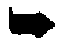 un empilement à deux couches comprenant successivement une couche à haut indice d'au moins 1,8 (notamment en oxyde d'étain SnO₂, de zinc ZnO, de zirconium ZrO₂, de titane TiO₂, en nitrure de silicium Si₃N₄ et/ou d'aluminium AIN), puis une couche à bas indice inférieur à 1,65, notamment en oxyde, oxynitrure ou oxycarbure de silicium,
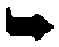 un empilement à trois couches, comportant successivement une couche d'indice moyen entre 1,65 et 1,80, du type oxycarbure ou oxynitrure de silicium et/ou d'aluminium, une couche d'indice égal ou supérieur à 1,9 comme SnO₂, ZnO, ZrO₂, Si₃N₄, TiO₂, et à nouveau une couche à bas indice inférieur à 1,65 en SiO₂ ou oxyde mixte de silicium et d'aluminium (éventuellement fluoré selon le brevet EP-791 562 précité) comme peuvent l'être toutes les autres couches en oxyde mixte Si, Al mentionnées plus haut).

L'invention a également pour objet le procédé de fabrication des substrats verriers à revêtement antireflet (A) selon l'invention. Un procédé consiste à déposer l'ensemble des couches, successivement les unes après les autres, par une technique sous vide, notamment par pulvérisation cathodique assistée par champ magnétique ou par décharge couronne. Ainsi, on peut déposer les couches d'oxyde par pulvérisation réactive du métal en question en présence d'oxygène et les couchés en nitrure en présence d'azote. Pour faire du SiO₂ ou du Si₃N₄, on peut partir d'une cible en silicium que l'on dope légèrement avec un métal comme l'aluminium pour la rendre suffisamment conductrice.

Pour l'éventuel revêtement antireflet B d'un autre type, plusieurs techniques de dépôt sont possibles, celles impliquant un traitement thermique ou celles se faisant à froid, notamment la technique sol-gel, les techniques de pyrolyse en phase pulvérulente, solide ou gazeuse, cette dernière étant également désignée sous le terme de CVD (Chemical Vapor Deposition). La CVD peut être assistée par plasma. On peut aussi utiliser les techniques sous vide du type pulvérisation cathodique.

Le revêtement antireflet A peut aussi être déposé à chaud. De préférence, le revêtement A est déposé par pulvérisation cathodique et le revêtement B par pyrolyse du type CVD. Il est également possible, comme le préconise le brevet WO97/43224 précité, qu'une partie des couches de l'un ou l'autre des empilements soit déposée par une technique de dépôt à chaud du type CVD, le reste de l'empilement étant déposé à froid par pulvérisation cathodique.

L'invention a également pour objet les applications de ces vitrages, dont la plupart ont déjà été évoqués : vitrine, présentoir, comptoir de magasin, vitrages pour le bâtiment, vitrage pour tout véhicule terrestre, aérien ou marin, notamment parebrise de véhicule, lunette arrière, toit auto, vitre latérale, écran anti-éblouissement, pour tout dispositif d'affichage comme les écrans d'ordinateur, la télévision, tout mobilier verrier, tout verre décoratif. Ces vitrages peuvent être bombés/trempés après dépôt des couches.

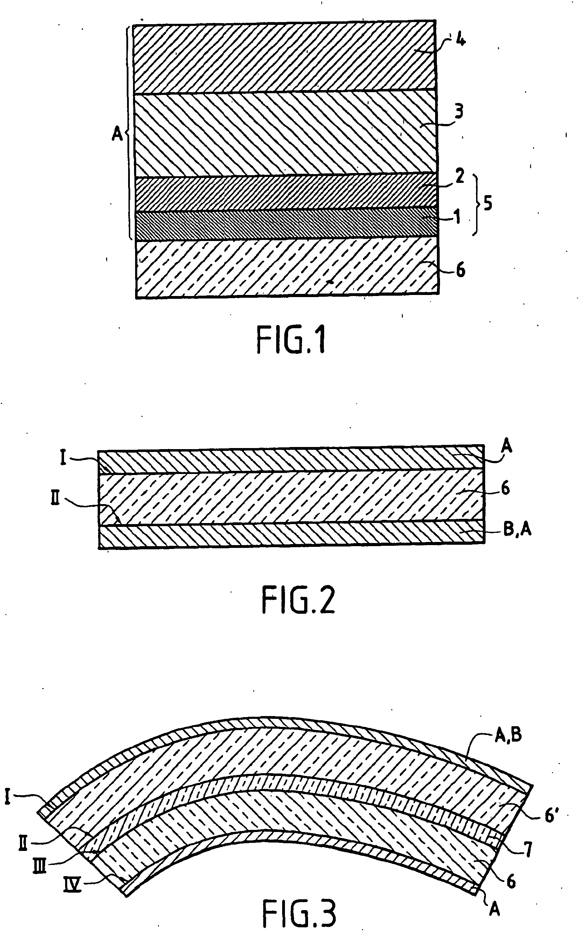

Les détails et caractéristiques avantageuses de l'invention vont maintenant ressortir des exemples suivants non limitatifs, à l'aide des figures :
□ **figure 1** : un substrat muni d'un empilement antireflet A à quatre couches selon l'invention,
□ **figure 2** : un vitrage monolithique muni de deux empilements antireflets (A, A) ou (A, B),
□ **figure 3** : un vitrage feuilleté muni de deux empilements antireflets (A, A) ou (A, B).

La figure 1, très schématique, représente en coupe un verre 6 surmonté d'un empilement antireflet (A) à quatre couches.

La figure 2, très schématique également, représente en coupe un vitrage monolithique, avec un verre (6) muni sur chacune de ses faces d'un empilement antireflet.

La figure 3 représente en coupe un vitrage feuilleté, dont chacune des faces extérieures est traitée antireflet.

Les exemples 1 à 10 suivants sont des résultats de modélisation, les exemples 11 à 15 ont été effectivement réalisés. Tous les exemples 1 à 13 concernent des empilements antireftets à quatre couches, l'exemple 14 concernant un revêtement antireflets à trois couches. Les couches ont toutes été déposées de façon conventionnelle par pulvérisation cathodique assistée par champ magnétique et réactive, en atmosphère oxydante à partir de cible de Si ou de métal pour faire des couches en Si02 ou en oxyde métallique, à partir de cible de Si ou de métal en atmosphère nitrurante pour faire des nitrures, et dans une atmosphère mixte oxydante/nitrurante pour faire les oxynitrures. Les cibles en Si peuvent contenir un autre métal en faible quantité, notamment Zr, Al, notamment afin de les rendre plus conductrices.

### EXEMPLES 1 à 10

Pour les exemples 2-4 et 7 à 10bis, l'empilement antireflet utilisé est le suivant :

| | | |
|---|---|---|
| (6) : | Verre | |
| (1) : | SnO₂ | indice n1 = 2 |
| (2) : | SiO₂ | indice n2 = 1,46 |
| (3) : | SnO₂(ou Si₃N₄) | indice n3 = 2 |
| (4): | SiO₂ | indice n4 = 1,46 |

Pour les exemples comparatifs 5-6, l'empilement antireflet utilisé est le suivant :

| | | |
|---|---|---|
| (6): | Verre | |
| (1) : | SnO₂ | indice 2 |
| (2): | SiO₂ | indice 1,46 |
| (3) : | TiO₂ | indice 2,40 |
| (4) : | SiO₂ | indice 1,46 |

les exemples 1 à 7 concernent un vitrage monolithique, les exemples 8 à 10 bis un vitrage feuilleté.

### Exemple 1 (comparatif)

Il s'agit du verre 6 de la figure 1, mais sans aucun revêtement. Le verre est un verre clair silico-sodo-calcique de 2 mm d'épaisseur, commercialisé sous le nom de Planilux par Saint-Gobain Vitrage.

### Exemple 2

Il s'agit du verre 6 de la figure 1 muni sur une seule face de l'empilement antireflet.

Le tableau ci-dessous résumé l'indice nᵢ et l'épaisseur géométrique eᵢ en nanomètres de chacune des couches :

| EXEMPLE 2 | COUCHE (1) | COUCHE (2) | COUCHE (3) | COUCHE (4) |
|---|---|---|---|---|
| nᵢ | 2,0 | 1,46 | 2,0 | 1,46 |
| eᵢ | 15 nm | 35 nm | 90 nm | 105 nm |

Cet exemple a pour but de minimiser au maximum la valeur de R_{L} du verre 6 (du côté revêtu) à incidence 60°.

### Exemple 3

C'est la même configuration de vitrage que l'exemple 2, mais en ayant pour but à la fois d'abaisser la valeur de R_{L} du côté où se trouvent les couches et d'obtenir une couleur dans les bleu-verts (a* et b* négatifs) en réflexion, toujours à incidence 60°. Les épaisseurs ont été ajustées différemment :

| EXEMPLE 3 | COUCHE (1) | COUCHE (2) | COUCHE (3) | COUCHE (4) |
|---|---|---|---|---|
| nᵢ | 2,0 | 1,46 | 2,0 | 1,46 |
| eᵢ | 19 nm | 17 nm | 100 nm | 95 nm |

### Exemple 4

Nous sommes toujours dans la configuration des exemples 2 et 3. Ici, on privilégie l'obtention d'un compromis le meilleur possible entre l'abaissement maximal de la R_{L} à incidence oblique (60°) et l'abaissement de la R_{L} à incidence normale (0°) :

| EXEMPLE 4 | COUCHE (1) | COUCHE (2) | COUCHE (3) | COUCHE (4) |
|---|---|---|---|---|
| ni | 2,0 | 1,46 | 2,0 | 1,46 |
| ei | 20 nm | 35 nm | 80 nm | 105 nm |

### Exemple 5 comparatif

Cet exemple utilise une couche 3 (TiO₂) d'indice significativement plus élevé que celui préconisé dans l'invention. L'épaisseur optique de cette couche 3 est choisie identique à celle de la couche 3 de l'exemple 2.

| EXEMPLE 5 | COUCHE (1) | COUCHE (2) | COUCHE (3) | COUCHE (4) |
|---|---|---|---|---|
| nᵢ | 2,0 | 1,46 | 2,40 | 1,46 |
| eᵢ | 15 nm | 35 nm | 75 nm | 105 nm |

### Exemple 6 comparatif

Cet exemple reprend la même séquence de couches que l'exemple 5 comparatif, en ayant pour objectif de minimiser la valeur de R_{L} côté couches à incidence oblique (60°).

| EXEMPLE 6 | COUCHE (1) | COUCHE (2) | COUCHE (3) | COUCHE (4) |
|---|---|---|---|---|
| nᵢ | 2,0 | 1,46 | 2,40 | 1,46 |
| eᵢ | 25 nm | 35 nm | 110 nm | 105 nm |

### Exemple 7

Cet exemple a la configuration de la figure 2, à savoir un verre (6) revêtu sur ses deux facesdu même empilement antireflet A. Le verre (6) est toujours du verre clair Planilux de 2 mm d'épaisseur.

L'objectif est icid'obtenir un bon compromis entre un abaissement de la R_{L} et l'obtention d'une couleur esthétique en réflexion, ceci à 60°.

| EXEMPLE 7 | COUCHE (1) | COUCHE (2) | COUCHE (3) | COUCHE (4) |
|---|---|---|---|---|
| nᵢ | 2,0 | 1,46 | 2,0 | 1,46 |
| eᵢ | 19 nm | 17 nm | 100 nm | 95 nm |

### Exemple 8 comparatif

C'est un vitrage feuilleté comme représenté à la figure 3, mais sans aucun revêtement antireflet.

Sa structure est la suivante :
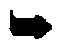 verre 6 : verre teinté dans la masse dans les verts, référencé sous le terme TSA³⁺ par Saint-Gobain Vitrage, de caractéristiques décrites dans le brevet EP 0 644 164 (composition très similaire à celle décrite dans le dernier exemple dudit brevet, mais avec un taux de fer total exprimé sous forme de Fe₂O₃ qui n'est que de 0.92% en poids), et de 2,1 mm d'épaisseur,
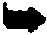 feuille 7 : feuille en PVB de 0,7 mm,
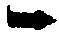 verre 6' : verre clair Planilux de 1,6 mm d'épaisseur

### Exemple 9

C'est le vitrage feuilleté selon la figure 3, avec la structure décrite dans l'exemple 8 comparatif, et, en face 4 (conventionnellement, les faces des verres constituant les vitrages sont numérotées par ordre croissant de l'extérieur vers l'intérieur de l'habitacle, bâtiment dans lequel le vitrage va être monté), un seul empilement antireflet selon l'invention, dont les caractéristiques sont données ci-dessous : l'objectif visé est ici le meilleur compromis entre l'abaissement de R_{L} et l'obtention d'une couleur satisfaisante en réflexion "côté couches" à incidence oblique (60°) :

| EXEMPLE 9 | COUCHE (1) | COUCHE (2) | COUCHE (3) | COUCHE (4) |
|---|---|---|---|---|
| n₁ | 2,0 | 1,46 | 2,0 | 1,46 |
| e₁ | 19 nm | 17 nm | 100 nm | 95 nm |

### Exemple 9 bis

C'est le même vitrage qu'à l'exemple 9, à l'exception près qu'ici le verre 6 est plus épais et fait 3,3 mm d'épaisseur, pour obtenir un effet de filtre vis-à-vis du rayonnement solaire plus important.

### Exemple 10

Il s'agit de la structure feuilletée selon la figure 3 et l'exemple 8, avec en face 4 l'empilement A selon l'exemple 9 et en face 1 un revêtement antireflet 3 différent de A et qui consiste en une couche en SiOₓN_{y} dont l'indice de réfraction décroît dans son épaisseur conformément à l'enseignement du brevet FR98/16118 précité, que l'on peut déposer par CVD plasma. Son épaisseur est de 260 nm environ.

### Exemple 10 bis

C'est le même vitrage qu'à l'exemple 9, à l'exception près qu'ici le verre 6 est plus épais et fait 4.00 mm, pour obtenir un effet de filtre vis-à-vis du rayonnement solaire plus important.

### EXEMPLES 11 à 13

Ces exemples ont été effectivement réalisés, tous sur des verres 6 clair de type Planilux de 2 mm d'épaisseur pour les exemples 11 et 12 et 4 mm pour l'exemple 13.

### Exemple 11

Le verre, conformément à la figure 1, a été revêtu sur une de ses faces seulement de l'empilement antireflet selon l'invention suivant :
Verre ⁽⁶⁾ / SnO₂ ⁽¹⁾ / SiO₂ ⁽²⁾ / SnO₂ ⁽³⁾ / SiO₂ ⁽⁴⁾

| EXEMPLE 11 | COUCHE (1) | COUCHE (2) | COUCHE (3) | COUCHE (4) |
|---|---|---|---|---|
| nᵢ | ≈ 2.05 | ≈ 1,46 | ≈ 2.05 | ≈ 1,46 |
| eᵢ | 19 nm | 17 nm | 100 nm | 95 nm |

Les couches en SiO₂ contiennent en fait environ 10% en poids d'oxyde d'aluminium, afin de leur conférer une meilleure durabilité, notamment chimique.

Le butde cet exemple est l'abaissement de la R_{L} à 60° et l'obtention de valeurs de a* et b* en réflexion négatives, et, en valeurs absolues, peu élevées en réflexion oblique (toujours côté couches).

### Exemple 12

Par rapport à l'exemple 11, on a substitué les deux couches de SnO₂ par deux couches de Si₃N₄.

On a donc la séquence :
Verre ⁽⁶⁾ / Si₃N₄ ⁽¹⁾ / SiO₂ ⁽²⁾ / Si₃N₄ ⁽³⁾ / SiO₂ ⁽⁴⁾

| EXEMPLE 12 | COUCHE (1) | COUCHE (2) | COUCHE (3) | COUCHE (4) |
|---|---|---|---|---|
| nᵢ | ≈ 2.08 | ≈ 1,46 | ≈ 2.08 | ≈ 1.46 |
| eᵢ | 19 nm | 17 nm | 100 nm | 95 nm |

Les couches en SiO₂ contiennent également environ 10% en poids d'oxyde d'aluminium.

La substitution du SnO₂ par du Si₃N₄ permet de rendre l'empilement bombable/trempable. Cela signifie, au sens de l'invention, que quand le substrat revêtu subit un traitement thermique de ce type, ses propriétés optiques restent quasiment inchangées. De manière quantitative, on peut estimer qu'il n'y a pas de changement optique significatif en réflexion quand la valeur de ΔE = (ΔL^{*2} + Δa^{*2} + Δb^{*2})½ mesurant les variations de L*, a* et b* avant et après traitement thermique reste inférieure à 2,5 ou, mieux, inférieure à 2.

### Exemple 13

Le vitrage selon cet exemple est traité sur ses deux faces. Il est muni à la fois en faces 1 et 2 du même empilement, celui utilisé à l'exemple 11 (alternativement, l'une et/ou l'autre des couches en SnO₂ peut être remplacé par du Si₃N₄).

Le tableau ci-dessous regroupe pour tous les exemples du présent brevet les valeurs photométriques suivantes :
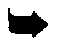 R_{L} (60°) : la réflexion lumineuse "côté couches" à 60° par rapport à la normale au vitrage, selon l'illuminant D₆₅, en %,
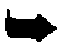 a*(60°), b*(60°) : les valeurs colorimétriques de la R_{L} (60°), sans unité,
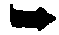 R_{L} (0°) : la réflexion lumineuse "côté couches" à incidence normale, en %,
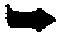 a*(0°), b*(0°) : les valeurs colorimétrique de la R_{L} à incidence normale, sans unité,
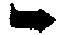 T_{L} (0°) : la transmission lumineuse selon l'illuminant D₆₅, en %.

| EXEMPLE | R_{L} (60°) | a* (60°) | b* (60°) | R_{L}(0°) | a* (0°) | b* (0°) | T_{L} (0°) |
|---|---|---|---|---|---|---|---|
| 1 | 15,4 | -0,3 | -0,3 | 8,0 | -0,2 | -0,5 | 90,8 |
| 2 | 11,8 | 2,2 | -4,5 | 5,8 | 3,5 | -19,3 | 92,9 |
| 3 | 12,1 | -1,0 | -1,9 | 5,3 | -2,2 | -2,6 | 93,5 |
| 4 | 11,9 | 1,8 | -1,9 | 5,0 | 9,8 | -23,5 | 93,8 |
| 5 | 13,8 | 5,4 | -4,3 | 9,1 | 1,2 | -17,3 | 89,7 |
| 6 | 11,8 | 2,1 | -4,8 | 6,2 | -5,6 | -6,6 | 92,5 |
| 7 | 7,9 | -2,9 | -6,3 | 2,5 | -7,0 | -7,0 | 96,3 |
| 8 | 13,7 | -2,9 | 0,4 | 7,2 | -2,8 | 0,0 | 78,7 |
| 9 | 10,0 | -5,6 | -1,2 | 4,5 | -6,1 | -1,9 | 80,7 |
| 9bis | 9,1 | -6,8 | -1,6 | 4,0 | -7,3 | -2,0 | 75,0 |
| 10 | 7,3 | -3,3 | -2,9 | 1,8 | -5,6 | -6,0 | 83,4 |
| 10bis | 6,5 | -4,8 | -3,2 | 1,7 | -6,2 | -5,7 | 75,0 |
| 11 | 11,8 | -0,7 | -0,8 | 5,3 | -3,4 | -0,4 | 92,3 |
| 12 | 11,6 | -0,6 | -0,9 | 5,2 | -3,7 | -7,1 | 94,0 |
| 13 | 7,7 | -0,6 | -2,1 | 2,3 | -3,7 | -7,1 | 95,3 |

Les exemples 11 et 12 ont subi un test de durabilité mécanique, le test TABER consistant à soumettre le substrat sur sa face revêtue de couches minces à un frottement circulaire par des meules abrasives chargées sous 500 grammes. Après 650 tours, la différence de flou observée ΔH est de 1,6 pour l'exemple 12 et n'est que de 0,5 pour l'exemple 13.

Cela confirme que les empilements selon l'invention, même déposés par pulvérisation cathodique, ont une durabilité satisfaisante, encore accrue si on privilégie le Si₃N₄ plutôt que le SnO₂ pour constituer tout ou partie des couches à haut indice.

Du tableau récapitulatif des données photométriques de l'ensemble des exemples, on peut faire les remarques suivantes :
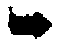 une fois les indices de réfraction sélectionnés, on peut ajuster les épaisseurs géométriques des couches selon que l'on mette plutôt l'accent sur la R_{L} ou la colorimétrie : de la comparaison des exemples 2 et 3, on voit que l'on peut descendre sous la barre des 12% en R_{L} à 60°, mais avec un a* positif (exemple 2), pour un substrat de verre clair revêtu sur une seule face notamment, ou alors avoir une valeur de R_{L} légèrement supérieure mais en contrepartie s'assurer que a* et b* à 60° sont bien négatifs,
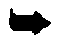 l'exemple 4 permet à la fois de descendre sous la barre des 12% en R_{L} à 60°, et d'atteindre 5% de R_{L} à 0°. Cela peut être intéressant quand il s'agit de verres du type comptoirs, susceptibles d'être observés sous des angles d'incidence très variés.

On peut parvenir selon invention en dessous des 8% de R_{L} à incidence oblique, si on munit le verre d'empilements antireflet sur ses deux faces (exemple 7).

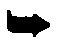 Les exemples comparatifs 5 et 6 montrent l'avantage d'utiliser du SnO₂ ou du Si₃N₄ plutôt que du TiO₂ en couche à haut indice : l'exemple 5 tente de reproduire, en épaisseur optique, l'exemple 2 (180 nm d'épaisseur optique dans les deux cas pour la couche 3), mais le résultat est moins bon : la R_{L} à 60° est de 13,8%. L'exemple 6 montre qu'on peut parvenir à des valeurs de R_{L} meilleures à 60°, mais au prix d'un fort épaississement de la couche 3 (264 nm d'épaisseur optique), ce qui n'est pas satisfaisant en termes de rendement de production.

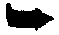 Les exemples en vitrage feuilleté confirment l'intérêt qu'il y a à munir des parebrise de voiture de revêtements antireflets selon l'invention.

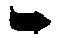 on gagne plus de 6% de R_{L} à 60° pour un pare-brise traité deux faces avec l'empilement de l'invention déposé en face 4 (exemple 10) par rapport à un parebrise standard (exemple 8). Cela permet donc soit d'augmenter le niveau de transmission lumineuse, soit d'utiliser des verres plus foncés ou plus épais, donc de mieux protéger les passagers du véhicule de la chaleur tout en passant la barre des 75% en T_{L} ; c'est ce que montrent les exemples 10 et 10 bis d'une part, 9 et 9 bis d'autre part. - les exemples 11 à 13 confirment les résultats modélisés : par rapport au verre nu de l'exemple 1, on abaisse ainsi la R_{L} à 60° d'au moins 3%, quasiment4%, en parvenant à maintenir les valeurs de a* et b* correspondantes négatives et d'au plus 2,1 en valeur absolue (et même d'au plus 1 en valeur absolue pour a*). L'effet est encore plus marqué si le verre est traité sur ses deux faces, avec une chute de plus de 7% de la R_{L} à 60°. En outre, dans tous les cas, il y a aussi un abaissement notable de la R_{L} à incidence normale (d'environ 3% par face traitée), avec également des a* et b* négatifs : une personne observant le vitrage dans une large plage d'angles d'incidence aura donc la vision d'un vitrage peu réfléchissant et qui ne "bascule pas" d'une teinte à l'autre en réflexion selon la façon dont on le regarde, ce qui est très avantageux.

### Exemple 14

Cet exemple concerne un empilement à trois couches seulement, les deux premières couches 1, 2 étant remplacées par une couche unique 5, comme représenté en figure 1.

Le substrat est un verre clair Planilux de 2 mm d'épaisseur, traité sur une seule de ses faces. L'empilement est le suivant :
Verre / 60 nm SiOₓN_{y} (n = 1,70)/100 nm Si₃N₄ / 95 nm SiO₂

Les données photométriques du verre revêtu sont les suivantes :

| | | |
|---|---|---|
| R_{L}(60°) = 12.1% | a* = -0.3 | b* = -1.2 |
| R_{L}(0°) = 5.3% | a* = -2.9 | b* = -5.0 |
| T_{L}(0°) = 93.5% | | |

On peut ainsi atteindre avec trois couches des performances similaires à celles d'un empilement antireflet selon l'invention à quatre couches : la colorimétrie en réflexion à 60 et 0° est satisfaisante. L'empilement à trois couches présente en outre une durabilité, notamment mécanique, au moins équivalente, voire supérieure, à l'empilement à quatre couches de l'invention utilisant au moins une couche en Si₃N₄.

### Exemple 15

Cet exemple concerne un vitrage feuilleté avec en face 4 le empilement antireflets (Si3N4/SiO2/Si3N4/SiO2) selon l'invention, et, entre les deux feuilles de PVB d'assemblage, une feuille de PET fonctionnalisée par le revêtement anti-solaire (oxyde d'indium/Ag/oxyde d'indium/Ag/oxyde d'indium).

La séquence est la suivante :
Verre Planilux de 2,1 mm/PVB de 380 microns/PET de 160 microns/In₂O₃ de 20 nm/Ag de 7 nm/In₂O₃ de 60 nm/Ag de 7 nm/In₂O₃ de 20 nm/PVB de 380 microns/verre Planilux de 2,1 mm/Si₃N₄ de 17 nm/SiO₂ de 18 nm/Si₃N₄ de 104 nm/SiO₂ de 108 nm

La valeur de réflexion lumineuse à 60° R_{L} (60°) est de 11,2%, alors qu'elle est de 14,9% si on la mesure sur un vitrage feuilleté identique mais dépourvu du revêtement antireflets en face 4.

La valeur de T_{L} à 0° est de 75.1 % (elle est de 75,3% sans revêtement antireflets).

La valeur de réflexion énergétique à 0° (incidence normale) R_{E} (O°) est de 25,6% et la valeur de transmission énergétique à O° T_{E} (O°) est de 52,2%.

Cet exemple montre l'efficacité d'un revêtement anti-solaire, qui réfléchit significativement l'infrarouge. Mais en contrepartie, l'utilisation d'un tel revêtement tend à augmenter la réflexion lumineuse côté intérieur. L'empilement antireflets selon l'invention permet de compenser cette augmentation de réflexion, et de maintenir le niveau de réflexion (intérieure) qu'aurait le feuilleté sans le revêtement anti-solaire.

Le même effet anti-solaire est obtenu si on utilise un revêtement à deux couches d'argent directement déposé sur l'un des verres, avec une seule feuille de PVB intercalaire.

## Revendications

1. Substrat transparent (6), notamment verrier, comportant sur au moins une de ses faces un revêtement antireflet, fait d'un empilement (A) de couches minces en matériau diélectrique d'indices de réfraction alternativement forts et faibles, ***caractérisé en ce que*** l'empilement comporte successivement :
- une première couche (1), à haut indice, d'indice de réfraction n₁ compris entre 1,90 et 2,10 et d'une épaisseur géométrique e₁ comprise entre 5 et 50 nm,
- une seconde couche (2), à bas indice, d'indice de réfraction n₂ compris entre 1,35 et 1,65 et d'épaisseur géométrique e₂ comprise entre 5 et 50 nm,
- une troisième couche (3), à haut indice, d'indice de réfraction n₃ compris entre 1,90 et 2,10 et d'épaisseur géométrique e₃ d'au moins 70 nm et inférieure ou égale à 110 nm,
- une quatrième couche (4), à bas indice, d'indice de réfraction n₄ compris entre 1,35 et 1,65 et d'épaisseur géométrique e₄ d'au moins 80 nm ;
la première couche à haut indice (1) et la troisième couche à haut indice étant à base d'oxyde(s) métallique(s) choisi(s) parmi l'oxyde de zinc et l'oxyde d'étain, ou à base de nitrure(s) choisi(s) parmi le nitrure de silicium et le nitrure d'aluminium ;
à la condition que le substrat transparent ne soit pas :
verre / une première couche de SnO₂ d'épaisseur 15 nm / une seconde couche de SiO2 d'épaisseur 15 nm / une troisième couche de SnO2 d'épaisseur 95 nm / une quatrième couche de SiO2 d'épaisseur 80 nm ; ou
verre / une première couche de SnO2 d'épaisseur 21 nm / une seconde couche de SiO2 d'épaisseur 23,5 nm / une troisième couche de SnO2:F d'épaisseur 80 nm / une quatrième couche de SiO2 d'épaisseur 90 nm.

2. Substrat (6) selon l'une des revendications précédentes, ***caractérisé en ce que*** n₂ et/ou n₄ sont compris entre 1,35 et 1,55.

3. Substrat (6) selon l'une des revendications précédentes, ***caractérisé en ce qu**e* e₁ est compris entre 10 et 30 nm, ou entre 15 et 25 nm.

4. Substrat (6) selon l'une des revendications précédentes, ***caractérisé en ce que*** e₂ est compris 10 et 35 nm, de préférence inférieur ou égal à 30 nm.

5. Substrat (6) selon l'une des revendications précédentes, ***caractérisé en ce que*** e₃ est d'au moins 75 nm.

6. Substrat (6) selon l'une des revendications précédentes, ***caractérisé en ce que*** e₄ est inférieur ou égal à 120 nm.

7. Substrat (6) selon l'une des revendications précédentes, ***caractérisé en ce que*** la seconde couche à bas indice (2) et/ou la quatrième couche à bas indice (4) sont à base d'oxyde de silicium, d'oxynitrure et/ou oxycarbure de silicium ou d'un oxyde mixte de silicium et d'aluminium.

8. Substrat (6) selon l'une des revendications précédentes, ***caractérisé en ce que*** ledit substrat est en verre, clair ou teinté dans la masse.

9. Substrat (6) selon l'une des revendications précédentes, ***caractérisé en ce que**,* du côté où il est muni de l'empilement (A) de couches minces, la réflexion lumineuse dudit substrat selon un angle d'incidence compris entre 50° et 70° est telle que les valeurs de a* et b* correspondantes, dans le système de colorimétrie (L*, a*, b*), sont négatives.

10. Substrat selon l'une des revendications précédentes, ***caractérisé en ce que*** l'empilement (A) antireflet utilise au moins pour sa troisième couche à haut indice du nitrure de silicium ou d'aluminium.

11. Vitrage ***caractérisé en ce qu'***il est composé du seul substrat (6) selon l'une des revendications précédentes, muni sur une de ses faces dudit empilement (A) de couche antireflet et sur son autre face, soit également dudit empilement (A) de couches antireflet, soit d'un revêtement antireflet d'un autre type (B), soit d'un revêtement ayant une autre fonctionnalité du type anti-solaire, bas-émissif, anti-salissures, anti-buée, anti-pluie, chauffant.

12. Vitrage ***caractérisé en ce qu'***il a une structure feuilletée qui associe deux substrats verriers (6, 6') à l'aide d'une feuille (7) en matériau thermoplastique, le premier substrat (6) selon l'une des revendications 1 à 10 étant muni, côté opposé à l'assemblage dudit empilement (A) antireflet, le deuxième substrat (6') étant muni, côté opposé à l'assemblage, soit d'aucun revêtement antireflet, soit également dudit empilement (A) antireflet, soit d'un autre type (B) de revêtement antireflet, soit d'un revêtement ayant une autre fonctionnalité du type anti-solaire, bas-émissif, anti-salissures, anti-buée, anti-pluie, chauffant, ledit revêtement ayant une autre fonctionnalité pouvant aussi se trouver sur l'une des faces des substrats tournées vers la feuille thermoplastique d'assemblage.

13. Vitrage selon la revendication 11 ou la revendication 12, ***caractérisé en ce que*** l'autre type (B) de revêtement antireflet est choisi parmi les revêtements suivants :
- une seule couche à bas indice, inférieur à 1,60 ou 1,50, notamment d'environ 1,35
- 1,48, notamment à base d'oxyde de silicium,
- une seule couche dont l'indice de réfraction varie dans son épaisseur, notamment du type oxynitrure de silicium SiOₓN_{y}, avec x et y variant dans son épaisseur,
- un empilement à deux couches, comprenant successivement une couche à haut indice d'au moins 1,8, notamment en oxyde d'étain, oxyde de zinc, oxyde de zirconium, oxyde de titane, nitrure de silicium ou d'aluminium, puis une couche à bas indice, inférieur à 1,65, notamment en oxyde, oxynitrure ou oxycarbure de silicium,
- un empilement à trois couches, comportant successivement une couche d'indice moyen entre 1,65 et 1,8 du type oxycarbure ou oxynitrure de silicium et/ou d'aluminium, une couche d'indice élevé supérieur à 1,9 du type SnO₂, TiO₂, une couche à bas indice, inférieur à 1,65 du type oxyde mixte Si-Al, oxyde de silicium.

14. Procédé d'obtention du vitrage selon l'une des revendications 11 ; 12 ou 13, ***caractérisé en ce qu***'***on*** dépose le ou les empilements (A) antireflets par pulvérisation cathodique, et l'éventuel revêtement (B) antireflet par une technique sol-gel, une technique de pyrolyse du type CVD, CVD plasma, par pulvérisation cathodique ou décharge couronne.

15. Application du vitrage selon l'une des revendications 11 à 13 en tant que vitrage intérieur ou extérieur pour le bâtiment, en tant que présentoir, comptoir de magasin pouvant être bombé, en tant que vitrage pour véhicule tels que les vitres latérales, la lunette arrière, le toit auto, le parebrise ou en tant que vitrage de protection d'objet du type tableau, en tant qu'écran anti-éblouissement d'ordinateur, en tant que mobilier verrier.

## Patentansprüche

1. Durchsichtiges Substrat (6), insbesondere aus Glas, umfassend auf mindestens einer seiner Flächen eine Anti-Reflexions-Beschichtung, gebildet aus einer Aufschichtung (A) aus dünnen Schichten aus dielektrischem Material mit abwechselnd hohen und niedrigen Brechungsindexen, **dadurch gekennzeichnet, dass** die Aufschichtung nacheinander umfasst:
- eine erste Schicht (1) mit hohem Index, mit einem Brechungsindex n₁, der zwischen 1,90 und 2,10 liegt, und mit einer geometrischen Dicke e₁, die zwischen 5 und 50 nm liegt,
- eine zweite Schicht (2) mit niedrigem Index, mit einem Brechungsindex n₂, der zwischen 1,35 und 1,65 liegt, und mit einer geometrischen Dicke e₂, die zwischen 5 und 50 nm liegt,
- eine dritte Schicht (3) mit hohem Index, mit einem Brechungsindex n₃, der zwischen 1,90 und 2,10 liegt, und mit einer geometrischen Dicke e₃ von mindestens 70 nm und weniger als oder gleich 110 nm,
- eine vierte Schicht (4) mit niedrigem Index, mit einem Brechungsindex n₄, der zwischen 1,35 und 1,65 liegt, und mit einer geometrischen Dicke e₄ von mindestens 80 nm;
wobei die erste Schicht (1) mit hohem Index und die dritte Schicht mit hohem Index auf Basis von Metalloxid(en) ausgewählt aus Zinkoxid und Zinnoxid oder auf Basis von Nitrid(en) ausgewählt aus Siliziumnitrid und Aluminiumnitrid ausgebildet sind;
unter der Bedingung, dass das durchsichtige Substrat nicht besteht aus:
Glas / einer ersten SnO2-Schicht mit einer Dicke von 15 nm / einer zweiten SiO2-Schicht mit einer Dicke von 15 nm / einer dritten SnO2-Schicht mit einer Dicke von 95 nm / einer vierten SiO2-Schicht mit einer Dicke von 80 nm; oder
Glas / einer ersten SnO2-Schicht mit einer Dicke von 21 nm / einer zweiten SiO2-Schicht mit einer Dicke von 23,5 nm / einer dritten SnO2:F-Schicht mit einer Dicke von 80 nm / einer vierten SiO2-Schicht mit einer Dicke von 90 nm.

2. Substrat (6) nach einem der vorhergehenden Ansprüche, **dadurch gekennzeichnet, dass** n₂ und/oder n₄ zwischen 1,35 und 1,55 liegen.

3. Substrat (6) nach einem der vorhergehenden Ansprüche, **dadurch gekennzeichnet, dass** e₁ zwischen 10 und 30 nm oder zwischen 15 und 25 nm liegt.

4. Substrat (6) nach einem der vorhergehenden Ansprüche, **dadurch gekennzeichnet, dass** e₂ zwischen 10 und 35 nm liegt, vorzugsweise kleiner als oder gleich 30 nm ist.

5. Substrat (6) nach einem der vorhergehenden Ansprüche, **dadurch gekennzeichnet, dass** e₃ mindestens 75 nm beträgt.

6. Substrat (6) nach einem der vorhergehenden Ansprüche, **dadurch gekennzeichnet, dass** e₄ kleiner als oder gleich 120 nm ist.

7. Substrat (6) nach einem der vorhergehenden Ansprüche, **dadurch gekennzeichnet, dass** die zweite Schicht mit niedrigem Index (2) und/oder die vierte Schicht mit niedrigem Index (4) auf Basis von Siliziumoxid, Siliziumoxidnitrid und/oder -oxidcarbid oder einem Mischoxid aus Silizium und Aluminium ausgebildet sind.

8. Substrat (6) nach einem der vorhergehenden Ansprüche, **dadurch gekennzeichnet, dass** das Substrat aus klarem oder in der Masse gefärbtem Glas besteht.

9. Substrat (6) nach einem der vorhergehenden Ansprüche, **dadurch gekennzeichnet, dass** die Lichtreflexion des Substrats auf der Seite, auf der es mit der Aufschichtung (A) der dünnen Schichten versehen ist, bei einem Einfallwinkel, der zwischen 50° und 70° liegt, derart ist, dass die entsprechenden Werte a* und b* in dem Kolorimetriesystem (L*, a*, b*) negativ sind.

10. Substrat nach einem der vorhergehenden Ansprüche, **dadurch gekennzeichnet, dass** die Anti-Reflexions-Aufschichtung (A) mindestens für ihre dritte Schicht mit hohem Index Siliziumnitrid oder Aluminiumnitrid verwendet.

11. Glasscheibe, **dadurch gekennzeichnet, dass** sie aus dem einzigen Substrat (6) nach einem der vorhergehenden Ansprüche zusammengesetzt ist, das auf einer seiner Flächen mit der Aufschichtung (A) aus Anti-Reflexionsschichten, und auf seiner anderen Fläche entweder ebenfalls mit der Aufschichtung (A) von Anti-Reflexionsschichten, oder einer Anti-Reflexions-Beschichtung einer anderen Art (B), oder einer Beschichtung, die eine andere Funktionalität vom Typ Sonnenschutz, Wärmeschutz, Schmutzabweisung, Antibeschlag, Regenschutz, Heizen aufweist, versehen ist.

12. Glasscheibe, **dadurch gekennzeichnet, dass** sie eine Verbundglasstruktur aufweist, die zwei Glassubstrate (6, 6') mithilfe einer Folie (7) aus thermoplastischem Material verbindet, wobei das erste Substrat (6) nach einem der Ansprüche 1 bis 10 an der der Verbindung gegenüberliegenden Seite mit der Anti-Reflexions-Aufschichtung (A) versehen ist, wobei das zweite Substrat (6') an der der Verbindung gegenüberliegenden Seite entweder mit keiner Anti-Reflexions-Beschichtung, oder ebenfalls mit der Anti-Reflexions-Aufschichtung (A), oder mit einer anderen Art (B) von Anti-Reflexions-Beschichtung, oder mit einer Schicht, die eine andere Funktionalität vom Typ Sonnenschutz, Wärmeschutz, Schmutzabweisen, Antibeschlag, Regenschutz, Heizen aufweist, versehen ist, wobei die Schicht, die eine andere Funktionalität aufweist, sich auch auf einer der Flächen der Substrate, die zu der thermoplastischen Verbindungsfolie gerichtet sind, befinden kann.

13. Glasscheibe nach Anspruch 11 oder Anspruch 12, **dadurch gekennzeichnet, dass** die andere Art (B) von Anti-Reflexions-Beschichtung aus den folgenden Beschichtungen ausgewählt ist:
- eine einzige Schicht mit niedrigem Index, der kleiner ist als 1,60 oder 1,50, insbesondere in etwa 1,35 bis 1,48, insbesondere auf Siliziumoxidbasis,
- eine einzige Schicht, deren Brechungsindex in ihrer Dicke variiert, insbesondere des Typs Siliziumoxidnitrid SiOₓN_{y}, wobei x und y in ihrer Dicke variieren,
- eine Aufschichtung von zwei Schichten, umfassend nacheinander eine Schicht mit hohem Index von mindestens 1,8, insbesondere aus Zinnoxid, Zinkoxid, Zirkoniumoxid, Titanoxid, Silizium- oder Aluminiumnitrid, und dann eine Schicht mit niedrigem Index von weniger als 1,65, insbesondere aus Siliziumoxid, -oxidnitrid oder -oxidcarbid,
- eine Aufschichtung von drei Schichten, umfassend nacheinander eine Schicht mit mittlerem Index zwischen 1,65 und 1,8 des Typs Siliziumoxidcarbid oder -oxidnitrid und/oder Aluminiumoxidcarbid oder - oxidnitrid, eine Schicht mit hohem Index von mehr als 1,9 des Typs SnO₂, TiO₂, eine Schicht mit niedrigem Index von weniger als 1,65 des Typs Si-Al-Mischoxid, Siliziumoxid.

14. Verfahren zur Herstellung der Glasscheibe nach einem der Ansprüche 11; 12 oder 13, **dadurch gekennzeichnet, dass** die Anti-Reflexions-Aufschichtung(en) (A) durch Kathodenzerstäubung und die mögliche Anti-Reflexions-Beschichtung (B) durch eine Sol-Gel-Technik, eine Pyrolysetechnik des Typs CVD, Plasma-CVD, durch Kathodenzerstäubung oder Teilentladung aufgetragen werden.

15. Verwendung der Glasscheibe nach einem der Ansprüche 11 bis 13 als Innen- oder Außenglasscheibe für Gebäude, als Schauvitrine, als Ladentheke, die gewölbt sein kann, als Fahrzeugglasscheibe, wie die Seitenscheiben, die Heckscheibe, das Autodach, die Windschutzscheibe, oder als Objektschutzscheibe des Typs Tafel, als blendgeschützter Computerbildschirm, als Glasmöbel.

## Claims

1. Transparent substrate (6), especially made of glass, comprising, on at least one of its faces, an antireflection coating, made of a stack (A) of thin layers of dielectric material having alternately high and low refractive indices, **characterized in that** the stack comprises, in succession:
- a high-index first layer (1), having a refractive index n₁ of between 1.90 and 2.10 and a geometrical thickness e₁ of between 5 and 50 nm;
- a low-index second layer (2), having a refractive index n₂ of between 1.35 and 1.65 and a geometrical thickness e₂ of between 5 and 50 nm;
- a high-index third layer (3), having a refractive index n₃ of between 1.90 and 2.10 and a geometrical thickness e₃ of at least 70 and less than or equal to 110 nm;
- a low-index fourth layer (4), having a refractive index n₄ of between 1.35 and 1.65 and a geometrical thickness e₄ of at least 80 nm;
the high-index first layer (1) and the high-index third layer (3) are based on one or more metal oxides chosen from zinc oxide and tin oxide or based on one or more nitrides chosen from silicon nitride and aluminium nitride;
provided that said transparent substrate is not:
glass/a first layer of SnO₂ with a thickness of 15 nm/ a second layer of SiO2 with a thickness of 15 nm/ a third layer of SnO₂ with a thickness of 95 nm/ a fourth layer of SiO2 with a thickness of 80 nm; or
glass/a first layer of SnO₂ with a thickness of 21 nm/ a second layer of SiO2 with a thickness of 23.5 nm/ a third layer of SnO:F with a thickness of 80 nm/ a fourth layer of SiO2 with a thickness of 90 nm.

2. Substrate (6) according to the preceding claim, **characterized in that** n₂ and/or n₄ are between 1.35 and 1.55.

3. Substrate (6) according to one of the preceding claims, **characterized in that** e₁ is between 10 and 30 nm or between 15 and 25 nm.

4. Substrate (6) according to one of the preceding claims, **characterized in that** e₂ is between 10 and 35 nm and preferably less than or equal to 30 nm.

5. Substrate (6) according to one of the preceding claims, **characterized in that** e₃ is at least 75 nm.

6. Substrate (6) according to one of the preceding claims, **characterized in that** e₄ is less than or equal to 120 nm.

7. Substrate (6) according to one of the preceding claims, **characterized in that** the low-index second layer (2) and/or the low-index fourth layer (4) are based on silicon oxide, silicon oxynitride and/or oxycarbide or on a mixed silicon aluminium oxide.

8. Substrate (6) according to one of the preceding claims, **characterized in that** the said substrate is made of clear or bulk-tinted glass.

9. Substrate according to one of the preceding claims, **characterized in that** the colorimetric response of its light reflection on the side where the stack (A) of thin layers is provided is such that the corresponding a* and b* values in the (L*, a*, b*) colorimetry system are negative at an angle of incidence of between 50° and 70°.

10. Substrate according to one of the preceding claims, **characterized in that** the antireflection stack (A) uses, at least for its high-index third layer, silicon nitride or aluminium nitride.

11. Glazing according to one of the preceding claims, **characterized in that** it is composed of the single substrate (6) provided, on one of its faces, with the multilayer antireflection stack (A) and, on its other face, either with no antireflection stack or also with a multilayer antireflection stack (A), or with another type (B) of antireflection coating, or with a coating having another functionality of the solar-protection, low-emissivity, antifouling, antifogging, anti-rain or heating type.

12. Glazing **characterized in that** it has a laminated structure in which two glass substrates (6, 6') are joined together using a sheet (7) of thermoplastic, the first substrate (6) according to one of Claims 1 to 11 being provided, on the opposite side to the join, with the antireflection stack (A) and the second substrate (6') being provided, on the opposite side to the join, either with no antireflection coating, or also with an antireflection stack (A), or with another type (B) of antireflection coating, or with a coating having another functionality of the solar-protection, low-emissivity, antifouling, antifogging, anti-rain or heating type, the said coating having another functionality possibly also being on one of the faces of the substrates which are turned towards the thermoplastic joining sheet.

13. Glazing according to Claim 11 or Claim 12, **characterized in that** the other type (B) of antireflection coating is chosen from the following coatings:
- a single low-index layer, having an index of less than 1.60 or 1.50, especially about 1.35-1.48, especially based on silicon oxide;
- a single layer whose refractive index varies through its thickness, especially of the silicon oxynitride SiOₓN_{y} type, where x and y vary through its thickness;
- a two-layer stack, comprising, in succession, a layer having a high index of at least 1.8, especially made of tin oxide, zinc oxide, zirconium oxide, titanium oxide, silicon nitride or aluminium nitride, and then a layer having a low index, of less than 1.65, especially made of silicon oxide, oxynitride or oxycarbide;
- A three-layer stack comprising, in succession, a layer having a medium index of between 1.65 and 1.8 of the silicon oxycarbide or oxynitride and/or aluminium oxycarbide or oxynitride type, a layer having a high index of greater than 1.9 of the SnO₂ or TiO₂ type, and a layer having a low index of less than 1.65, of the mixed Si-Al oxide or silicon oxide type.

14. Process for obtaining the glazing according to one of Claims 11; 12 or 13, **characterized in that** the antireflection stack or stacks (A) is/are deposited by sputtering and the optional antireflection coating (B) is deposited by a sol-gel technique, by a pyrolysis technique of the CVD or plasma CVD type, by sputtering or by corona discharge.

15. Application of the glazing according to one of Claims 11 to 13 as interior or exterior glazing for buildings, as a shop display cabinet or counter, which may be curved, as glazing for vehicles, such as the side windows, the rear window, the sunroof and the windscreen, or as glazing for protecting objects of the painting type, or as an antidazzle computer screen, or as glass furniture.
